(19) Europäisches Patentamt
European Patent Office
Office européen des brevets

(11) EP 0 795 578 A2

(12) # EUROPEAN PATENT APPLICATION

(43) Date of publication:
17.09.1997 Bulletin 1997/38

(51) Int Cl.6: C08K 7/00, C08L 21/00

(21) Application number: 97301596.9

(22) Date of filing: 11.03.1997

(84) Designated Contracting States:
DE FR GB IT

(30) Priority: 11.03.1996 JP 52982/96

(71) Applicant: Bridgestone Corporation
Tokyo (JP)

(72) Inventors:
- Teratani, Hiroyuki
Iruma City, Saitama Pref. (JP)
- Toyoda, Masaki
Kodaira City, Tokyo (JP)

(74) Representative: Whalley, Kevin et al
MARKS & CLERK,
57-60 Lincoln's Inn Fields
London WC2A 3LS (GB)

(54) **Grain-containing rubber compositions**

(57) A grain-containing rubber composition contains a particular amount of porous grains having particular hardness, grain size, pore size and specific surface area based on 100 parts by weight of rubber ingredient, and improves braking performance on ice and the like when being used in a tire tread.

EP 0 795 578 A2

## Description

This invention relates to a grain-containing rubber composition, and more particularly to a novel rubber composition having a high friction coefficient on snow and ice road surfaces. The grain-containing rubber composition according to the invention can be applied to not only a tread rubber of a pneumatic tire but also shoe sole, caterpillar and so on.

Recently, there is increasing the demand of so-called all-season tires capable of using without conducting tire change even in winter season likewise summer season. This type of the tire has the same dry gripping property, wet gripping property, steering stability, durability and low fuel consumption as developed in the summer season even in the winter season and also has sufficient traction and braking performances on ice and snow roads.

It has been known that a tread rubber used in such a all-season tire is subjected to a method of lowering a hardness at low temperature of a tread rubber for summer season or using a polymer having a low glass transition point, or a method of using a softening agent so as to properly hold a modulus of elasticity at a low temperature.

In the former method, however, the performances at ice and snow temperature regions are developed to a satisfiable extent owing to hysteresis of the polymer, but there is a problem that the braking performance and the steering property on wet or dry road surface are not sufficient. On the other hand, the latter method has been disclosed in JP-A-55-135149, JP-A-58-199203, JP-A-60-137945 and the like and is pointed out to have a problem that a serious influence upon the wear resistance and durability when the tire is run on general road becomes large in comparison with the improvement of performances on ice and snow roads.

In any case, the above methods certainly develop good performances on snow and ice roads at a relatively low temperature region of not higher than -5°C or so-called dry-on-ice performances, but it is hardly said that sufficient friction coefficient is ndt obtained as a performance on snow and ice roads at a wet state of about 0°C or so-called wet-on-ice performance and hence the traction and braking performances and steering stability are not sufficiently improved.

Lately, there have been adopted techniques for improving the friction force of the tread rubber itself. As a first technique, there is a method of foaming the tread rubber by a proper process to form closed cells (JP-A-63-89547). In general, a layer called as a false liquid layer is existent on an ice surface. If a body is pushed and slidden on ice, a part of the false liquid layer changes into a water film and hence such a water film serves as a lubricant to develop a low friction coefficient.

Since the surface of the tread rubber containing closed cells therein is covered with many cells, the water film created at the contact area with the ice surface is removed off by these cells, and also an effect of scraping the false liquid layer is developed accompanied with the microscopic movement of the cells to provide a high friction on ice. In the tire for use on snow and ice roads, it is generally attempted to increase the number of edges in a block by arranging many sipes in the block, an object of which is to develop a function of scraping the false liquid layer from the ice surface by edge portions of the sipes in the block, which is called as "macroscopically edge effect". On the contrary, microscopic unevenness is formed in the tread rubber by the closed cells according to the above first technique, in which the function of cbnvex portions in the unevenness is "microscopic edge effect".

The first technique is actually applied to the tire tread and the resulting tire products are commercially available as a studless tire. On the other hand, there is examined a method wherein various foreign matters (natural resources such as sand, chaff and the like) are incorporated into the tread rubber and fallen off from the tread in the actual running to create pores. This method is the same as the foaming method as regards the mechanism for providing high friction on ice.

According to the first technique, there is developed the effect of removing the false liquid layer from the ice surface, but the performances are not sufficiently satisfied because this method is different from a method of providing high friction on ice by directly scraping ice solid itself through spikes as used in the conventional spike tire.

As a second technique, there is a method wherein various high-hardness materials are incorporated into the tread rubber and the scraping effect of the high-hardness material on ice surface is utilized for realizing the high friction of the tread rubber on ice (JP-B-46-31732, JP-A-51-147803, JP-B-56-52057, and JP-B-6-102737). This technique is a method of providing the high friction of the tread rubber on ice through a mechanism clearly different from that of the first technique. In many cases, as the amount of the high-hardness material incorporated becomes larger, the tread rubber actually tends to be rendered into high friction on ice.

Among the above techniques, according to the first technique, the ice surface is scraped by the foamed tread rubber or the convex portions in the unevenness of the tread surface after the removal of the foreign matters incorporated, while water content on the ice surface is absorbed and drained by the concave portions. However, when ice becomes harder or is at a low temperature hardly melting the ice surface (usually not higher than -3°C), the water absorbing and draining performances are hardly required and also the scraping effect can not be developed too much.

On the other hand, the second technique of incorporating the high-hardness material having a high scraping effect into a matrix rubber of the tread has drawbacks that the effect of improving the performances on ice at about 0°C having a high water content is small, and the wear resistance and fracture properties are considerably degraded due

to the presence of the high-hardness material as a foreign matter having no affinity with rubber.

Under the above circumstances, the inventors have already proposed composite particles formed by compounding syn-1,2-polybutadiene resin with sulfur, vulcanization accelerator, carbon black and scorch retarder in order to improve the performances on snow and ice road surfaces at wet state, and examined the incorporation of the composite particles into a foamed tread rubber from a viewpoint of the coexistence with the wear resistance. However, it can not be said that these performances sufficiently arrive at a level required in commercial markets, so that it is demanded to further improve such performances.

Moreover, the actual ice surface temperature variously changes from the daytime to night, so that it is desired to obtain tire treads stably exhibiting the performances on ice over a wide temperature range without considerably degrading the wear resistance and fracture properties.

And also, the conventional foamed rubber has a function of improving friction coefficient on ice by removing off water film generated on the surface of ice road at the ground contact area of the tire as an effect of removing and draining water, but is critical for removing off a greater amount of water film at wet-on-ice state, so that it is difficult to improve the friction coefficient on ice at the wet-on-ice state. As another means for improving the performances on ice, the method of compounding particles having particular particle size and hardness as a microspike improves the scraping effect to a certain level, but is less in the synergistic action between the scraping effect and the drainage effect, so that the performance level on ice is still insufficient.

As the reason why the synergistic action is less in the above method, there is mentioned a relation that the hardness of the particle is in reverse proportion to the adhesion. That is, in the above conventional technique, as the particle becomes harder, the larger the scraping effect, but the smaller the adhesion to rubber matrix, so that it is liable to cause the falling off of the particles from the frictional surface of the tire contacting with ground to decrease the effective spike number and hence there are left problems that the scraping effect is not last long and the degradation of the wear resistance and crack resistance is caused. Further, when the above hard particles are added to rubber containing a foaming agent, the foaming is caused at interface to the particles and hence the adhesion force to rubber matrix is lowered.

It is, therefore, an object of the invention to provide rubber compositions hardly falling off a high-hardness material compounded and atably developing the braking performance on ice and providing an excellent durability when such a rubber composition is used as a tread rubber for a tire or the like.

According to the invention, there is the provision of a grain-containing rubber composition comprising 3-30 parts by weight of porous grains having a hardness of not less than 75 degree by spring type hardness test (C type) according to JIS K-6301, an average grain size of 5-2000 μ m, an average surface pore size of 40-1000Å and a specific surface area according to BET nitrogen adsorption process of 10-800 $m^2/g$, based on 100 parts by weight of rubber ingredient.

In preferable embodiments of the invention, the grain has silicon-bonded hydroxy group (Si-OH) and/or aluminum-bonded hydroxyl group (Al-OH) in its surface, and the grain is made of silica gel and/or alumina, and the grain-containing rubber composition further contains 3-50% by weight, based on the weight of the grain, of at least one silane coupling agent represented by the following general formula:

$$Y_3\text{-Si-}C_nH_{2n}A$$

(wherein Y is an alkyl group having a carbon number of 1-4, an alkoxy group having a carbon number of 1-4 or a chlorine atom and three Y groups are same or different, and n is an integer of 1-6, and A is a group selected from $-S_mC_nH_{2n}Si\text{-}Y_3$ and $-S_mZ$ in which Z is

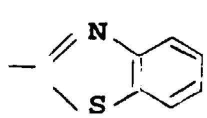

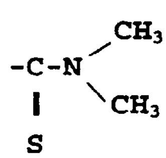

or 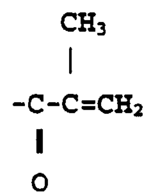

and m is an integer of 1-6), and such a composition has a foaming property, and such a composition is used as a tread rubber for a pneumatic tire.

The invention will be described in detail below.

As a rubber ingredient used in the invention, mention may be made of ones usually used as a tread rubber, which include, for example, natural rubber, isoprene rubber, styrene-butadiene copolymer rubber, butadiene rubber, butyl rubber and a blend thereof.

As the porous grain to be incorporated, the hardness of the bulk material, before it is ground into grain, measured by means of a spring type hardness meter (C type )according to JIS K-6301 is defined to be as high as not less than 75 degree because when the hardness is less than 75 degree, the sufficient scraping effect is not obtained. The hardness is preferably not less than 90 degree, more particularly not less than 95 degree.

Further, the average grain size of the grain is defined to be 5-2000 μ m. When the average grain size is less than 5 μ m, the sufficient scraping effect is not obtained, while when it exceeds 2000 μ m, the grains are fallen off due to input from road surface rather than adhesion force to lose the scraping effect. Preferably, the average grain size is 10-1500 μ m.

The measurement of the average grain size is carried out according to usual manner by a laser diffraction through microtracks (light scattering process) using NIKKISO microtrack MKII grain size analyzer made by Nikkiso Co., Ltd.

The pores existing on the surface of the porous grain is necessary to have an average pore size of 40-1000Å. Since the grains are porous, they cause a physical anchor effect to the rubber matrix and are hardly fallen off from the rubber matrix. When the average pore size on the grain surface is less than 40Å, even if the value of the specific surface area according to BET nitrogen adsorption process is within the defined range, the adhesion of the grain surface to rubber is low and hence the grains are fallen off from the surface of the tread during the running when such a rubber composition is applied to the tread of the pneumatic tire. While, when it exceeds 1000Å, even if the value of the specific surface area is within the defined range, the grains become brittle and are broken and hence the sufficient scraping effect is not obtained. Preferably, the average pore size is 40-300 Å.

Since the surface area of the grain is large owing to the porosity, the grain is defined to have a specific surface area according to BET nitrogen adsorption process of 10-800 $m^2/g$. When the specific surface area is less than 10 $m^2/g$, the surface area becomes small and the adhesion force of the grain is lacking and hence the falling off of the grains is caused during the running, while when it exceeds 800 $m^2/g$, the space volume of pore in the grain increases and the strength of the grain itself lowers and hence the grain is broken during the contact with ground. Preferably, the specific surface area is 100-600 $m^2/g$. Moreover, the measurement of the specific surface area according to BET nitrogen adsorption process used in the invention is according to ASTM D3037.

The amount of the grains compounded is defined to be 3-30 parts by weight based on 100 parts by weight of rubber ingredient. When the amount is less than 3 parts by weight, the sufficient scraping effect is not obtained, while when it exceeds 30 parts by weight, there is caused a problem in the durability.

Furthermore, the grains are favorable to have silicon-bonded hydroxy group (Si-OH) and/or aluminum-bonded hydroxy group (Al-OH) as a chemical nature of the grain surface. This is due to the fact that Si-OH and/or Al-OH of the grain easily react with a silane coupling agent used in the invention to form a primary bond to the polymer rubber, whereby the strong adhesion force is obtained.

And also, it is favorable that a particular silane coupling agent is compounded with the rubber ingredient in an amount of 3-50% by weight based on the weight of the grain. When the amount is less than 3% by weight, the adhesion force is lacking and the performances on ice are not improved, while when it exceeds 50% by weight, a greater amount of sulfur is released from the coupling agent to increase the modulus of elasticity of the rubber matrix and the cost is undesirably and largely increased, and the performances on ice are degraded and further the cracking is apt to be caused.

When the silane coupling agent is used in the presence of the silicon-bonded hydroxy group or aluminum-bonded hydroxy group, the porous grains can be chemically bonded to the rubber matrix in addition to the physical bond through the pores, so that the problem of the falling off is largely overcome.

As the silane coupling agent to be compounded with the rubber composition according to the invention, mention may be made of bis(3-triethoxysilylpropyl) tetrasulfide, bis(2-triethoxysilylethyl) tetrasulfide, bis(3-trimethoxysilylpropyl) tetrasulfide, bis(2-trimethoxysilylethyl) tetrasulfide, 3-mercaptopropyl trimethoxysilane, 3-mercaptopropyl triethoxysilane, 2-mercaptoethyl trimethoxysilane, 3-nitropropyl trimethoxysilane, 3-nitropropyl triethoxysilane, 3-chloropropyl trimethoxysilane, 3-chloropropyl triethoxysilane, 2-chloroethyl trimethoxysilane, 2-chloroethyl triethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropyl benzothiazole tetrasulfide, 3-triethoxysilylpropyl benzothiazole tetrasulfide, 3-triethoxysilylpropyl methacrylate monosulfide, 3-trimethoxysilylpropyl methacrylate monosulfide and so on. Among them, bis(3-triethoxysilylpropyl) tetrasulfide, 3-trimethoxysilylpropyl benzothiazole tetrasulfide and the like are preferable. Moreover, when three Y groups in the general formula are different, mention may be made of bis(3-diethoxymethylsilylpropyl) tetrasulfide, 3-mercaptopropyl dimethoxymethylsilane, 3-nitropropyl dimethoxymethylsilane, 3-chloropropyl dimethoxymethylsilane, dimethoxymethylsilyl-N,N-dimethylthiocarbamoyl tetrasulfide, dimethoxymethylsilylpropyl benzothiazole tetrasulfide and so on.

Moreover, additives usually used in rubber field may be used properly.

When the rubber composition is used as the tread rubber, the expansion ratio may be controlled from a surface layer of the tread to an innermost layer thereof, whereby the change of the performances on ice up to complete wearing can be made small. The foaming may be carried out by using a foaming agent, or by mixing with gas under a high pressure.

In case of the tread rubber, the rubber composition according to the invention is preferred to have an expansion ratio Vs of 5-35%. When such a rubber composition is used as the tread rubber of the pneumatic tire, the closed cells in the foamed rubber develop a microscopically large drainage effect and excellent performances on snow and ice roads at a state of existing molten water on ice surface of about 0°C.

The "expansion ratio $V_s$" used herein is represented by the following equation:

$$V_s = \{(\rho_0 - \rho_g)/(\rho_1 - \rho_g) - 1\} \times 100\ (\%) \qquad (1)$$

wherein $\rho_1$ is a density of foamed rubber (g/cm$^3$), $\rho_0$ is a density of solid phase portion in the foamed rubber (g/cm$^3$), and $\rho_g$ is a density of gas portion in cells of the foamed rubber (g/cm$^3$). The foamed rubber is constructed with the solid phase portion and cavities (closed cells) defined by the solid phase portion or gas portion in the cells. The density $\rho_g$ of the gas portion is very small as compared with the density of the solid phase portion $\rho_1$ and is approximately near to zero, so that the equation (1) is substantially equal to the following equation:

$$V_s = \{(\rho_0 / \rho_1) - 1\} \times 100\ (\%) \qquad (2)$$

The following examples are given in illustration of the invention and are not intended as limitations thereof.

In each of Examples and Comparative Examples, there is prepared a tire (tire size: 195/65R14) comprising a tread made from a rubber composition having a compounding recipe as shown in Tables 1-4 (unit is parts by weight otherwise specified) under usual vulcanization conditions, and performances described in these tables are measured by the following methods.

Braking performance on ice

It is evaluated on ice road at an ice temperature of -2°C, in which the test tire is straightforward run on a test course over a distance of 200 m and rapidly braked from a speed of 20 km/h. The braking performance is represented by an index on the basis that the braking distance of each of Comparative Examples 1, 3, 6 and 8 is 100. The larger the index value, the better the braking performance.

Wear resistance

The test tire is run on general-purpose road over a distance of 20,000 km and thereafter the remaining groove depth is measured. The wear resistance is represented by an index on the basis that the measured value of each of Comparative Examples 1, 3, 6 and 8 is 100. The larger the index value, the better the wear resistance.

Test for cracking appearance

After the test tire is actually run on general-purpose road over a distance of 7,000 km, the occurrence of cracking in the tread rubber is observed on the circumference of the tire. The cracking appearance is evaluated by ranks of ◎ no cracking, ○: crack length within 0.5 mm, Δ: crack length within 1 mm, and X: crack length of more than 1 mm.

Table 1

| | Comparative Example 1 *6 | Example 1 | Example 2 | Example 3 | Example 4 | Example 5 | Example 6 | Example 7 | Comparative Example 2 |
|---|---|---|---|---|---|---|---|---|---|
| NR | 70 | 70 | 70 | 70 | 70 | 70 | 70 | 70 | 70 |
| BR | 30 | 30 | 30 | 30 | 30 | 30 | 30 | 30 | 30 |
| Carbon black N220 | 50 | 50 | 50 | 50 | 50 | 50 | 50 | 50 | 50 |
| Stearic acid | 1.5 | 1.5 | 1.5 | 1.5 | 1.5 | 1.5 | 1.5 | 1.5 | 1.5 |
| ZnO | 4.0 | 4.0 | 4.0 | 4.0 | 4.0 | 4.0 | 4.0 | 4.0 | 4.0 |
| Antioxidant *1 | 1.0 | 1.0 | 1.0 | 1.0 | 1.0 | 1.0 | 1.0 | 1.0 | 1.0 |
| Accel DM *2 | 0.2 | 0.2 | 0.2 | 0.2 | 0.2 | 0.2 | 0.2 | 0.2 | 0.2 |
| Accel CZ *3 | 0.5 | 0.5 | 0.5 | 0.5 | 0.5 | 0.5 | 0.5 | 0.5 | 0.5 |
| Sulfur | 1.0 | 1.0 | 1.0 | 1.0 | 1.0 | 1.0 | 1.0 | 1.0 | 1.0 |
| DPT *4/urea *5 | 5.5 | 5.5 | 5.5 | 5.5 | 5.5 | 5.5 | 5.5 | 5.5 | 5.5 |
| Kind of grain | - | A | B | C | D | E | F | G | H |
| Amount of grain | - | 10 | 10 | 10 | 10 | 10 | 10 | 10 | 10 |
| Average grain size (μm) | - | 5 | 10 | 50 | 80 | 350 | 1270 | 2000 | 2500 |
| Average pore size (Å) | - | 60 | 60 | 60 | 60 | 60 | 60 | 60 | 60 |
| Specific surface area ($m^2/g$) | - | 450 | 450 | 450 | 450 | 450 | 450 | 450 | 450 |
| Coupling agent (kind) | - | A | A | A | A | A | A | A | A |
| Coupling agent (amount) | - | 2.0 | 2.0 | 2.0 | 2.0 | 2.0 | 2.0 | 2.0 | 2.0 |
| (wt%) | - | (20) | (20) | (20) | (20) | (20) | (20) | (20) | (20) |
| Expansion ratio (%) | 25 | 25 | 25 | 25 | 25 | 25 | 25 | 25 | 25 |
| Braking performance on ice | 100 | 105 | 110 | 118 | 121 | 131 | 122 | 112 | 108 |
| Wear resistance | 100 | 102 | 102 | 101 | 101 | 100 | 100 | 100 | 100 |
| Cracking appearance | ◎ | ◎ | ◎ | ◎ | ◎ | ◎ | ○ | ○ | × |

## Table 2

| | Comparative Example 3 *6 | Example 8 | Example 9 | Example 10 | Example 11 | Example 12 | Example 13 | Comparative Example 4 | Example 14 | Example 15 | Example 16 | Comparative Example 5 |
|---|---|---|---|---|---|---|---|---|---|---|---|---|
| NR | 35 | 35 | 35 | 35 | 35 | 35 | 35 | 35 | 35 | 35 | 35 | 35 |
| BR | 65 | 65 | 65 | 65 | 65 | 65 | 65 | 65 | 65 | 65 | 65 | 65 |
| Carbon black N220 | 50 | 50 | 50 | 50 | 50 | 50 | 50 | 50 | 50 | 50 | 50 | 50 |
| Stearic acid | 1.5 | 1.5 | 1.5 | 1.5 | 1.5 | 1.5 | 1.5 | 1.5 | 1.5 | 1.5 | 1.5 | 1.5 |
| ZnO | 4.0 | 4.0 | 4.0 | 4.0 | 4.0 | 4.0 | 4.0 | 4.0 | 4.0 | 4.0 | 4.0 | 4.0 |
| Antioxidant *1 | 1.0 | 1.0 | 1.0 | 1.0 | 1.0 | 1.0 | 1.0 | 1.0 | 1.0 | 1.0 | 1.0 | 1.0 |
| Accel DM *2 | 0.2 | 0.2 | 0.2 | 0.2 | 0.2 | 0.2 | 0.2 | 0.2 | 0.2 | 0.2 | 0.2 | 0.2 |
| Accel CZ *3 | 0.5 | 0.5 | 0.5 | 0.5 | 0.5 | 0.5 | 0.5 | 0.5 | 0.5 | 0.5 | 0.5 | 0.5 |
| Sulfur | 1.2 | 1.2 | 1.2 | 1.2 | 1.2 | 1.2 | 1.2 | 1.2 | 1.2 | 1.2 | 1.2 | 1.2 |
| DPT *4/urea *5 | 5.3 | 5.3 | 5.3 | 5.3 | 5.3 | 5.3 | 5.3 | 5.3 | 5.3 | 5.3 | 5.3 | 5.3 |
| Kind of grain | - | I | B | J | K | L | M | N | D | O | P | Q |
| Amount of grain | - | 15 | 15 | 15 | 15 | 15 | 15 | 15 | 15 | 15 | 15 | 15 |
| Average grain size (μm) | - | 10 | 10 | 10 | 10 | 10 | 10 | 10 | 80 | 80 | 80 | 80 |
| Average pore size (Å) | - | 40 | 60 | 100 | 200 | 300 | 1000 | 2000 | 60 | 60 | 150 | - |
| Specific surface area ($m^2/g$) | - | 650 | 480 | 350 | 200 | 160 | 30 | 10 | 450 | 190 | 70 | 0.6 |
| Coupling agent (kind) | - | B | B | B | B | B | B | B | B | B | B | B |
| Coupling agent (amount) | - | 4.5 | 4.5 | 4.5 | 4.5 | 4.5 | 4.5 | 4.5 | 4.5 | 4.5 | 4.5 | 4.5 |
| (wt%) | - | (30) | (30) | (30) | (30) | (30) | (30) | (30) | (30) | (30) | (30) | (30) |
| Expansion ratio (%) | 20 | 20 | 20 | 20 | 20 | 20 | 20 | 20 | 20 | 20 | 20 | 20 |
| Braking performance on ice | 100 | 112 | 114 | 116 | 112 | 110 | 106 | 100 | 128 | 121 | 126 | 100 |
| Wear resistance | 100 | 101 | 101 | 101 | 101 | 101 | 100 | 100 | 101 | 100 | 100 | 98 |
| Cracking appearance | ○ | ○ | ○ | ○ | ○ | ○ | ○ | ○ | ◎ | ◎ | ◎ | △ |

Table 3

| | Comparative Example 6 *6 | Example 17 | Example 18 | Example 19 | Comparative Example 7 | Example 20 | Example 21 | Example 22 | Example 23 | Example 24 |
|---|---|---|---|---|---|---|---|---|---|---|
| NR | 60 | 60 | 60 | 60 | 60 | 60 | 60 | 60 | 60 | 60 |
| BR | 40 | 40 | 40 | 40 | 40 | 40 | 40 | 40 | 40 | 40 |
| Carbon black N220 | 45 | 45 | 45 | 45 | 45 | 45 | 45 | 45 | 45 | 45 |
| Stearic acid | 1.5 | 1.5 | 1.5 | 1.5 | 1.5 | 1.5 | 1.5 | 1.5 | 1.5 | 1.5 |
| ZnO | 3.5 | 3.5 | 3.5 | 3.5 | 3.5 | 3.5 | 3.5 | 3.5 | 3.5 | 3.5 |
| Antioxidant *1 | 1.0 | 1.0 | 1.0 | 1.0 | 1.0 | 1.0 | 1.0 | 1.0 | 1.0 | 1.0 |
| Accel DM *2 | 0.3 | 0.3 | 0.3 | 0.3 | 0.3 | 0.3 | 0.3 | 0.3 | 0.3 | 0.3 |
| Accel CZ *3 | 0.8 | 0.8 | 0.8 | 0.8 | 0.8 | 0.8 | 0.8 | 0.8 | 0.8 | 0.8 |
| Sulfur | 1.1 | 1.1 | 1.1 | 1.1 | 1.1 | 1.1 | 1.1 | 1.1 | 1.1 | 1.1 |
| DPT *4/urea *5 | 5.5 | 5.5 | 5.5 | 5.5 | 5.5 | 5.5 | 5.5 | 5.5 | 5.5 | 5.5 |
| Kind of grain | - | B | B | B | B | B | B | B | B | B |
| Amount of grain | - | 10 | 3 | 30 | 35 | 10 | 10 | 10 | 10 | 10 |
| Average grain size (μm) | - | 10 | 10 | 10 | 10 | 10 | 10 | 10 | 10 | 10 |
| Average pore size (Å) | - | 60 | 60 | 60 | 60 | 60 | 60 | 60 | 60 | 60 |
| Specific surface area ($m^2/g$) | - | 450 | 450 | 450 | 450 | 450 | 450 | 450 | 450 | 450 |
| Coupling agent (kind) | - | A | A | A | A | - | A | A | A | A |
| Coupling agent (amount) | - | 1.5 | 0.45 | 4.5 | 5.25 | - | 0.3 | 3.5 | 5.0 | 6.0 |
| (wt%) | - | (15) | (15) | (15) | (15) | - | (3.0) | (35) | (50) | (60) |
| Expansion ratio (%) | 25 | 25 | 25 | 25 | 25 | 25 | 25 | 25 | 25 | 25 |
| Braking performance on ice | 100 | 114 | 106 | 121 | 123 | 107 | 109 | 118 | 106 | 102 |
| Wear resistance | 100 | 102 | 102 | 100 | 98 | 100 | 100 | 101 | 100 | 100 |
| Cracking appearance | ◎ | ◎ | ◎ | ○ | △ | ◎ | ◎ | ◎ | ○ | ○ |

## Table 4

| | Comparative Example 8 *6 | Example 25 | Example 26 | Example 27 | Example 28 | Example 29 | Comparative Example 9 | Example 30 | Comparative Example 10 | Example 31 | Comparative Example 11 | Example 32 | Comparative Example 12 |
|---|---|---|---|---|---|---|---|---|---|---|---|---|---|
| NR | 75 | 75 | 75 | 75 | 75 | 75 | 75 | 75 | 75 | 75 | 75 | 75 | 75 |
| BR | 25 | 25 | 25 | 25 | 25 | 25 | 25 | 25 | 25 | 25 | 25 | 25 | 25 |
| Carbon black N220 | 50 | 50 | 50 | 50 | 50 | 50 | 50 | 50 | 50 | 50 | 50 | 50 | 50 |
| Stearic acid | 1.5 | 1.5 | 1.5 | 1.5 | 1.5 | 1.5 | 1.5 | 1.5 | 1.5 | 1.5 | 1.5 | 1.5 | 1.5 |
| ZnO | 4.0 | 4.0 | 4.0 | 4.0 | 4.0 | 4.0 | 4.0 | 4.0 | 4.0 | 4.0 | 4.0 | 4.0 | 4.0 |
| Antioxidant *1 | 1.0 | 1.0 | 1.0 | 1.0 | 1.0 | 1.0 | 1.0 | 1.0 | 1.0 | 1.0 | 1.0 | 1.0 | 1.0 |
| Accel DM *2 | 0.2 | 0.2 | 0.2 | 0.2 | 0.2 | 0.2 | 0.2 | 0.2 | 0.2 | 0.2 | 0.2 | 0.2 | 0.2 |
| Accel CZ *3 | 0.6 | 0.6 | 0.6 | 0.6 | 0.6 | 0.6 | 0.6 | 0.6 | 0.6 | 0.6 | 0.6 | 0.6 | 0.6 |
| Sulfur | 1.2 | 1.2 | 1.2 | 1.2 | 1.2 | 1.2 | 1.2 | 1.2 | 1.2 | 1.2 | 1.2 | 1.2 | 1.2 |
| DPT *4/urea *5 | - | - | - | - | - | - | - | - | - | - | - | - | - |
| Kind of grain | - | A | C | D | E | G | Q | O | R | C | R | O | Q |
| Amount of grain | - | 7.5 | 7.5 | 7.5 | 7.5 | 7.5 | 7.5 | 7.5 | 7.5 | 7.5 | 7.5 | 7.5 | 7.5 |
| Average grain size (μm) | - | 5 | 50 | 80 | 350 | 2000 | 80 | 80 | 50 | 50 | 50 | 80 | 80 |
| Average pore size (Å) | - | 60 | 60 | 60 | 60 | 60 | - | 60 | - | 60 | - | 60 | - |
| Specific surface area ($m^2/g$) | - | 450 | 450 | 450 | 450 | 450 | 0.6 | 190 | 7.0 | 450 | 7.0 | 190 | 0.6 |
| Coupling agent (kind) | - | B | B | B | B | B | B | B | B | - | - | - | - |
| Coupling agent (amount) | - | 1.5 | 1.5 | 1.5 | 1.5 | 1.5 | 1.5 | 1.5 | 1.5 | - | - | - | - |
| (wt%) | - | (20) | (20) | (20) | (20) | (20) | (20) | (20) | (20) | - | - | - | - |
| Expansion ratio (%) | - | - | - | - | - | - | - | - | - | - | - | - | - |
| Braking performance on ice | 100 | 116 | 126 | 128 | 130 | 135 | 100 | 116 | 100 | 115 | 100 | 110 | 100 |
| Wear resistance | 100 | 102 | 102 | 101 | 101 | 100 | 99 | 101 | 99 | 100 | 99 | 100 | 98 |
| Cracking appearance | ◎ | ◎ | ◎ | ◎ | ○ | ○ | △ | ○ | △ | ◎ | △ | ○ | △ |

Note) *1: Nocrac 6C, made by Ohuchi Shinko Kagaku Co., Ltd.

*2: dibenzothiazyl disulfide (vulcanization accelerator)

*3: N-cyclohexyl-2-benzothiazyl sulfenamide (vulcanization accelerator)

*4: dinitrosopentamethylene tetramine

*5: DPT:urea = 1:1 (weight ratio)

*6: A rubber composition containing no grain is used as a control every kind of rubber composition.

In the above tables are used grains A-R shown in Table 5.

Table 5

| Kind of grain * | Average pore size (Å) | Average grain size (μ m) | BET ($m^2/g$) | Material | Maker |
|---|---|---|---|---|---|
| A | 60 | 5 | 450 | Porous silicagel | made by Daiso Co., Ltd. SP-60-5 |
| B | 60 | 10 | 450 | Porous silicagel | made by Daiso Co., Ltd. SP-60-10 |
| C | 60 | 50 | 450 | Porous silicagel | made by Merck Corp. 9385-2M classification product |
| D | 60 | 80 | 450 | Porous silicagel | made by Merck Corp. 15101-1M classification product |
| E | 60 | 350 | 450 | Porous silicagel | made by Merck Corp. 7733-1M classification product |
| F | 60 | 1270 | 450 | Porous silicagel | made by Kanto Kagaku Co., Ltd. |
| G | 60 | 2000 | 450 | Porous silicagel | trial product |
| H | 60 | 2500 | 450 | Porous silicagel | trial product |
| I | 40 | 10 | 650 | Porous silicagel | made by Merck Corp. 10180-2M pulverized product |

* All of grains A-R has a hardness by spring type hardness test (C type) according to JIS K6301 of 99.

Table 5 (continued)

| Kind of grain * | Average pore size (Å) | Average grain size (μ m) | BET ($m^2/g$) | Material | Maker |
|---|---|---|---|---|---|
| J | 100 | 10 | 350 | Porous silicagel | made by Merck Corp. 10184-1M pulverized product |
| K | 200 | 10 | 200 | Porous silicagel | made by Daiso Co., Ltd. Sb-200-10 |
| L | 300 | 10 | 160 | Porous silicagel | made by Daiso Co., Ltd. SP-300-10 |
| M | 1000 | 10 | 30 | Porous silicagel | made by Daiso Co., Ltd. SP-1000-10 |
| N | 2000 | 10 | 10 | Porous silicagel | made by Daiso Co., Ltd. SP-2000-10 |
| O | 60 | 80 | 190 | Porous alumina | made by Merck Corp. 1067-2M pulverized classification |
| P | 150 | 80 | 70 | Porous alumina | made by Merck Corp. 1061-2M pulverized classification |
| Q | none | 80 | 0.6 | Alumina | made by Showa Denko Co., Ltd. A-12c classification product |
| R | none | 50 | 7.0 | Alumina | made by Showa Denko Co., Ltd. A-13-L classification product |

* All of grains A-R has a hardness by spring type hardness test (C type) according to JIS K6301 of 99.

If necessary, the grains are readjusted to a desired grain size by pulverization or classification with a sieve. In the above tables are used silane coupling agents A and B shown in Table 6.

Table 6

| | Compound name | Structural formula |
|---|---|---|
| Silane coupling agent-A | bis(3-triethoxysilylpropyl)-tetrasulfide | $[(C_2H_5O)_3SiC_3H_6]_2S_4$ |
| Silane coupling agent-B | trimethoxysilylpropyl-benzothiazole-tetrasulfide | $(CH_3O)_3SiC_3H_6S_4$- 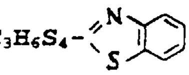 |

As seen from the above tables, when the rubber composition containing a particular amount of particular porous grain according to the invention is used in a tire tread, the resulting tire can develop good braking performance on ice.

In Comparative Example 4 using grains having a large average pore size, such grains are brittle and are broken during the running of the tire and hence good results can not be obtained.

In Comparative Example 5 using inorganic grains, even if the coupling agent is added, the adhesion force is poor and hence good results can not be obtained.

In Comparative Example 7 having a greater amount of grains compounded, the wear resistance is undesirably degraded.

Moreover, Example 20 is a case of adding no silane coupling agent. In this case, the sufficient adhesion property is obtained to exhibit good results because the grains are porous. The results are more improved by adding the silane coupling agent.

As mentioned above, when the rubber composition containing particular porous grains according to the invention is used as a tread rubber of a pneumatic tire, physical bonding force can be obtained between grain and rubber matrix to improve the braking performance on ice and the wear resistance and control the occurrence of the cracking.

Furthermore, when grains having a particular chemical group in their surface are used, and when the particular silane coupling agent is added, grains can chemically be bonded to rubber matrix in addition to the above physical bonding force, whereby the performances are more improved.

Moreover, when the foaming property is applied to rubber, the drainage effect and scraping effect of unevenness in the resulting closed cells are effectively added in addition to the above performances.

## Claims

1. A grain-containing rubber composition comprising 3-30 parts by weight of porous grains having a hardness of not less than 75 degree by spring type hardness test (C type) according to JIS K-6301, an average grain size of 5-2000 μ m, an average surface pore size of 40-1000Å and a specific surface area according to BET nitrogen adsorption process of 10-800 $m^2/g$, based on 100 parts by weight of rubber ingredient.

2. A grain-containing rubber composition according to claim 1, wherein the grain has silicon-bonded hydroxy group (Si-OH) and/or aluminum-bonded hydroxyl group (Al-OH) in its surface.

3. A grain-containing rubber composition according to claim 1 or 2, wherein the grain is made of silica gel and/or alumina.

4. A grain-containing rubber composition according to claim 1 or 2, wherein the grain-containing rubber composition further contains 3-50% by weight, based on the weight of the grain, of at least one silane coupling agent represented by the following general formula:

$$Y_3\text{-Si-}C_nH_{2n}A$$

(wherein Y is an alkyl group having a carbon number of 1-4, an alkoxy group having a carbon number of 1-4 or a chlorine atom and three Y groups are same or different, and n is an integer of 1-6, and A is a group selected from

$-S_mC_nH_{2n}Si-Y_3$ and $-S_mZ$ in which Z is

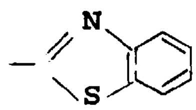

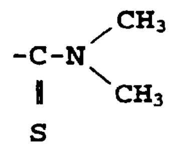

or 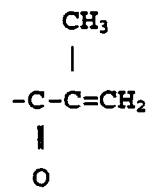

and m is an integer of 1-6).

5. A grain-containing rubber composition according to claim 1, wherein the grain-containing rubber composition has a foaming property.

6. A grain-containing rubber composition according to claim 1, wherein the grain-containing rubber composition is used as a tread rubber for a pneumatic tire.

7. A pneumatic tire having a tread element comprised of a grain-containing rubber composition comprising 3-30 parts by weight of porous grains having a hardness of not less than 75 degree by spring type hardness test (C type) according to JIS k-6301, an average grain size of 5-2000 µm, an average surface area of 40-1000 Å and a specific surface area according to BET nitrogen adsorption process of 10-800 $m^2/g$, based on 100 parts by weight of rubber ingredient.

8. A method of improving the traction of pneumatic tires on snow or ice, wherein a grain-containing rubber composition comprising 3-30 parts by weight of porous grains having a hardness of not less than 75 degree by spring type hardness test (C type) according to JIS K-6301, an average grain size of 5-2000 µm an average surface area of 40-1000 Å and a specific surface area according to BET nitrogen adsorption process of 10-800 $m^2/g$ is used as a tread rubber composition.